Europäisches Patentamt

European Patent Office

Office européen des brevets

(19)

(11) Veröffentlichungsnummer : **0 472 838 B1**

(12) **EUROPÄISCHE PATENTSCHRIFT**

(45) Veröffentlichungstag der Patentschrift :
28.09.94 Patentblatt 94/39

(21) Anmeldenummer : 91110145.9

(22) Anmeldetag : 20.06.91

(51) Int. Cl.⁵ : **G01B 7/16**

(54) Vorrichtung zur Messung von Dehnungen, Stauchungen und dergleichen an längenveränderbaren Bauteilen oder Maschinenteilen.

(30) Priorität : **19.07.90 DE 4022957**

(43) Veröffentlichungstag der Anmeldung :
**04.03.92 Patentblatt 92/10**

(45) Bekanntmachung des Hinweises auf die Patenterteilung :
**28.09.94 Patentblatt 94/39**

(84) Benannte Vertragsstaaten :
**AT BE CH DE DK ES FR GB IT LI LU NL SE**

(56) Entgegenhaltungen :
**GB-A- 2 187 294
GB-A- 2 200 457
US-A- 4 058 005**

(56) Entgegenhaltungen :
**SOVIET INVENTIONS ILLUSTRATED, Derwent Publications Ltd., London, GB, section Electrical, week 9032, class S02, No. 90-245254/32, 19 September 1990; & SU - A - 1539514**
**SOVIET INVENTIONS ILLUSTRATED, Derwent Publications Ltd., London, GB, section Electrical, week 8831, class S02, no. 88-219106/31, 14 September 1988; & SU - A - 1366873**
**STRAIN, Band 16, Nr. 3, Juli 1980, Seiten 113-119, Newcastle, GB; C.F. Cook: "An electrical demountable strain transducer"**

(73) Patentinhaber : **Stark, Emil, jr.**
**Komminger Strasse 48**
**A-6840 Götzis (AT)**

(72) Erfinder : **Stark, Emil, jr.**
**Komminger Strasse 48**
**A-6840 Götzis (AT)**

(74) Vertreter : **Riebling, Peter, Dr.-Ing.,**
**Patentanwalt**
**Postfach 31 60**
**D-88113 Lindau (DE)**

EP 0 472 838 B1

## Beschreibung

Gegenstand der vorliegenden Erfindung ist eine Vorrichtung zur Messung von Dehnungen, Stauchungen, Kräften und Verwindungen an längenveränderlichen Bauteilen, wie z.B. Maschinenteilen, Brücken, Skiliftmasten, Kranträgern und -auslegern, Anhängerbrücken für Kfz., Strassen- und Eisenbahnbrücken, Geleisen und dergleichen Bauteile mehr, wobei Meßwertgeber, wie z. B. Dehnungsmeßstreifen, Meßtaster, Meßuhren, Piezo- oder Quarzdruckmeßdosen verwendet werden.

Derartige Vorrichtungen sind bekannt, die mit dem Dehnungsmeßstreifenprinzip arbeiten. Hierbei wird die Längenveränderung des zu messenden Bauteiles auf einen im Meßgerät angeordneten Dehnungsmeßstreifen übertragen und die mechanische Verformung des Dehnungsmeßstreifens wird in ein elektrisches Signal umgesetzt.

Eine nach diesem Prinzip arbeitende Vorrichtung zum Messen von Materialeigenschaften ist aus der GB 2 187 294 A bekannt. Die darin beschriebene Vorrichtung besteht aus einem beweglichen Meßgeberträger, der einen oder mehrere Sensoren trägt und mit einem Verriegelungsmechanismus ausgestattet ist, mit welchem diesem Meßgeberträger auf einer fest mit dem zu messenden Baustück angebrachten Lagereinheit festgelegt werden kann. Die Verriegelungseinheit umfaßt einen Druckkolben, welcher über einen Bedienungsgriff betätigt werden kann, um den aufgesetzten Meßgeberträger auf das zu messende Werkstück abzusenken. Zur Messung der Zugspannung sind hierbei zwei fest in dem Meßgeberträger fixierte Schneiden vorgesehen, die auf der Oberfläche des Werkstückes eingreifen.

Wesentlicher Nachteil dieser Vorrichtung ist jedoch, daß der Meßgeberträger jeweils auf einen fest mit dem zu prüfenden Werkstück verbundenen Lagersockel aufgesteckt werden muß, wodurch die Messung aufwendig und nicht an beliebigen Orten des Werkstückes durchgeführt werden kann.

Nachteil bei den bisher bekannten Vorrichtungen, die nach dem Dehnungsmeßstreifenprinzip arbeiten, ist, daß die Fixierung des Geräts auf dem zu messenden Bauteil schwierig ist. Es ist zwar bekannt, derartige Dehnungsmeßstreifen einmalig durch Verkleben oder andere Formschlußverbindungen mit dem Bauteil zu verbinden. Ziel der vorliegenden Erfindung ist es jedoch, eine derartige Vorrichtung derart weiterzubilden, daß die Vorrichtung jederzeit von dem zu messenden Bauteil entfernt werden kann und transportabel ist. Eine einmalige Befestigung eines Dehnungsmeßstreifens mit einem Bauteil soll also vermieden werden.

Der vorliegenden Erfindung liegt deshalb die Aufgabe zugrunde, eine Vorrichtung der eingangs genannten Art so weiterzubilden, daß ein leicht transportables Gerät geschaffen wird, mit dem kleinste Längenveränderungen von Bauteilen erfaßt werden können, wobei die Befestigung am Bauteil sicher ist, ohne das Bauteil selbst zu zerstören.

Zur Lösung der gestellten Aufgabe ist die Erfindung dadurch gekennzeichnet, daß die Vorrichtung ein Gehäuse aufweist, in dem zwei einen gegenseitigen Abstand voneinander einnehmende Messer vorhanden sind, von denen das eine Messer fest mit dem Gehäuse und das andere Messer in seinem Abstand zu dem feststehenden Messer verschiebbar oder biegbar im Gehäuse gelagert ist, und die Veränderung des Abstandes der Messer zueinander mittels den Meßwertgebern erfaßt wird, wobei im Gehäuse ein Hub- und Absenkmechanismus zum Anheben und Absenken der Vorrichtung Haftmagnete funktionsfähig macht, so daß das Gehäuse magnetisch haftend mit dem zu messenden Bauteil verbunden sein kann, wobei gleichzeitig die Spitzen der Messer auf der Oberfläche des zu messenden Bauteils in Meßrichtung verschiebefest in Eingriff bringbar sind, und daß in der angehobenen Hubstellung der Vorrichtung die Haftmagnete außer Kraft gesetzt sind und die Messerspitzen außer Eingriff mit der zu messenden Oberfläche bringbar sind.

In einer bevorzugten Ausführungsform der vorliegenden Erfindung ist es vorgesehen, daß jeweils die Messer in der Nähe der Stirnseiten des Gehäuses angeordnet sind und daß an jeder Stirnseite des Gehäuses - nach einer ersten Ausführungsform lediglich ein einziges Messer und - nach einer zweiten Ausführungsform - zwei nebeneinander liegende, einen gegenseitigen Abstand voneinander einnehmende Messer angeordnet sind.

In der zweiten Ausführungsform werden also an jeder Stirnseite des Gehäuses zwei auseinander liegende Messer vorgeschlagen. Damit besteht der Vorteil, daß man auch runde prismatische oder sonstwie mit gebogener Oberfläche aufweisende Körper messen kann und sogar die Vorrichtung in ein Rohr einschieben kann, und dort mit der zu pressenden Oberfläche über den beschriebenen Hub- und Absenkmechanismus verankern kann.

Jedes Messer besteht bevorzugt aus einer Messerscheibe, die drehbar am Gehäuse gelagert ist. Damit besteht der Vorteil, daß, wenn eine Messerkante einmal beschädigt sein sollte, man dann die Dreharretierung des Messers am Gehäuse löst, das Messer ein Stück weiterdreht und eine unbeschädigte Messerkante nach unten dreht, um somit eine unbeschädigte Messerkante zur Messung einsetzen zu können.

Für das Meßprinzip der vorliegenden Erfindung gibt es mehrere Ausführungsformen.

In einer ersten Ausführungsform ist vorgesehen, daß das verschiebbar oder biegbar gelagerte Messer in

2

Verbindung mit seiner Befestigung in abgesenkter Stellung bei der Längenveränderung des Bauteils eine Biegung erfährt, und daß diese Durchbiegung der Befestigung über einen oder mehrere daran angeordnete Dehnungsmeßstreifen erfaßt wird.

Nachdem die beiden Messer fest über die vorher erwähnte Formschlußverbindung mit dem Bauteil verbunden sind, wird somit eine Längenveränderung des zu messenden Bauteils unmittelbar auf diesen H-Schenkel des H-Profils übertragen und kann somit über die Dehnungsmeßstreifen ausgewertet werden.

In einer anderen Ausführungsform der vorliegenden Erfindung ist es vorgesehen, daß die verschiebbar gelagerten Messer in ihrem Abstand zueinander verschiebbar im Gehäuse angeordnet sind und daß diese Verschiebung der Messer über eine mechanische Meßuhr oder über einen elektronischen Meßtaster erfaßt wird.

Ebenso ist es möglich, die Verschiebung dieser Messer über eine nach dem Piezo-Prinzip funktionierende oder nach dem Dehnungsmeßstreifenprinzip funktionierende Druckmeßdose zu erfassen.

Ein anderes Meßprinzip wäre die Erfassung der entsprechenden Veränderung der Messer über eine Quarz-Meßdose.

Wichtig bei der vorliegenden Erfindung ist also die Tatsache, daß man zwei ortsfeste Punkte, nämlich zwei auseinander liegende Messeranordnungen so mit der Oberfläche des zu messenden Objektes verbindet, daß praktisch eine Formschlußverbindung zwischen der Oberfläche des zu messenden Objektes und den Messeranordnungen hergestellt wird.

Zur Herstellung dieser Formschlußverbindung ist es wichtig, daß in der Meßstellung der Vorrichtung diese Vorrichtung durch Magnetkraft fest an die Oberfläche des Meßobjektes angedrückt wird und hierbei die Messerspitzen sich in die Oberfläche des Meßobjektes eingraben.

Im Falle, daß eine gehärtete Oberfläche eines Bauteiles gemessen werden soll, reicht es aus, die noch vorhandene Rauheit dieses Bauteils auszunützen. Aus diesem Grunde sind die Messerscheiben scharf angeschliffen, um eben in Rauhigkeitskerben dieses Bauteils formschlüssig einzugreifen.

In einer bevorzugten Ausführungsform der vorliegenden Erfindung wird eine Meßlänge zwischen den auseinander liegenden Messeranordnungen von 200 mm bevorzugt.

Für größere Meßgenauigkeiten ist es jedoch möglich, diese Meßlänge entsprechend zu verlängern, z.B. auf 400 mm oder mehr.

Mit der derzeitigen Meßanordnung wird eine Genauigkeit von 1/10000 mm erreicht.

Bei der Hub-und Absenkvorrichtung, welche in die Meßvorrichtung eingebaut ist, handelt es sich - entsprechend der vorstehenden Beschreibung - um eine Magnethaftanordnung. Hierbei ist wichtig, daß mit einem Steuerhebel die gesamte Magnethaftanordnung in eine Funktionsstellung und in eine Tot-Stellung gebracht werden kann.

Hierbei ist ein Verschiebemechanismus vorgesehen, der den Haftmagneten zugeordnet ist. Dieser Verschiebemechanismus verschiebt gleichzeitig bei der Betätigung des Steuerhebels die Haftmagneten von einer Tot-Stellung in eine Haft-Stellung, wobei gleichzeitig mit dieser Verschiebebewegung die Vorrichtung kontinuierlich abgesenkt wird.

Hierdurch wird die Vorrichtung also von einer angehobenen Stellung über dem Meßobjekt (die Messerscheiben sind hierbei dann nicht in Eingriff mit dem Meßobjekt) in eine abgesenkte Stellung verschoben, wobei mit zunehmender Absenkung der Vorrichtung über dem Meßobjekt gleichzeitig kontinuierlich die Haftmagnete eingeschaltet werden und das Gehäuse gleichzeitig während dieses kontinuierlichen Einschaltens kontinuierlich abgesenkt wird. Auf diese Weise wird gewährleistet, daß sich die Messerspitzen mit zunehmender Absenkung der Vorrichtung auf das Meßobjekt mit zunehmender Kraft eingraben. Die Haftkraft nimmt also kontinuierlich während des Absenkens zu, bis sie ein Maximum in der abgesenkten Stellung der Vorrichtung auf dem Meßobjekt erreicht hat. Es handelt sich also um ein sehr feinfühliges Absitzen der Vorrichtung auf dem Meßobjekt, um zu vermeiden, daß für ein plötzliches, schlagartiges Aufsetzen die Messerscheiben beschädigt werden.

Wichtig ist ferner, daß zwischen den beiden Messern in abgesenkter Stellung (Meßstellung) noch ein Reibungsschluß zwischen der Meßoberfläche und der Unterseite der Meßvorrichtung vorhanden ist.

Dieser Reibungsschluß wird nach einer bevorzugten Ausführungsform der vorliegenden Erfindung durch eine Reihe von parallel zueinander angeordneten und schwimmend in Nuten der Vorrichtung eingesetzten O-Ringe erreicht. In der Meßstellung sind also diese O-Ringe in Funktion und ergeben einen Reibungsschluß der Meßvorrichtung mit der Meßoberfläche. Damit wird vermieden, daß bei runden Meßobjekten die Meßvorrichtung um die Messerscheibe herum sich dreht und evtl. unterhalb einer zu messenden Welle an der Welle hängt. Damit ist es möglich, die Längenveränderung an der Welle auch in seitlicher Richtung zu messen, ohne daß die Meßvorrichtung um die zu messende Welle herum schwingt.

Weitere Vorteile und Merkmale der Erfindung werden nun anhand der Zeichnungen erläutert. Hierbei zeigen:

Figur 1:     schematisiert gezeichneter Schnitt durch eine Meßvorrichtung nach der Erfindung,

Figur 2:       Stirnansicht der Vorrichtung in Richtung des Pfeiles II in Figur 1,

Figur 3:       Draufsicht auf den Meßbalken der Vorrichtung.

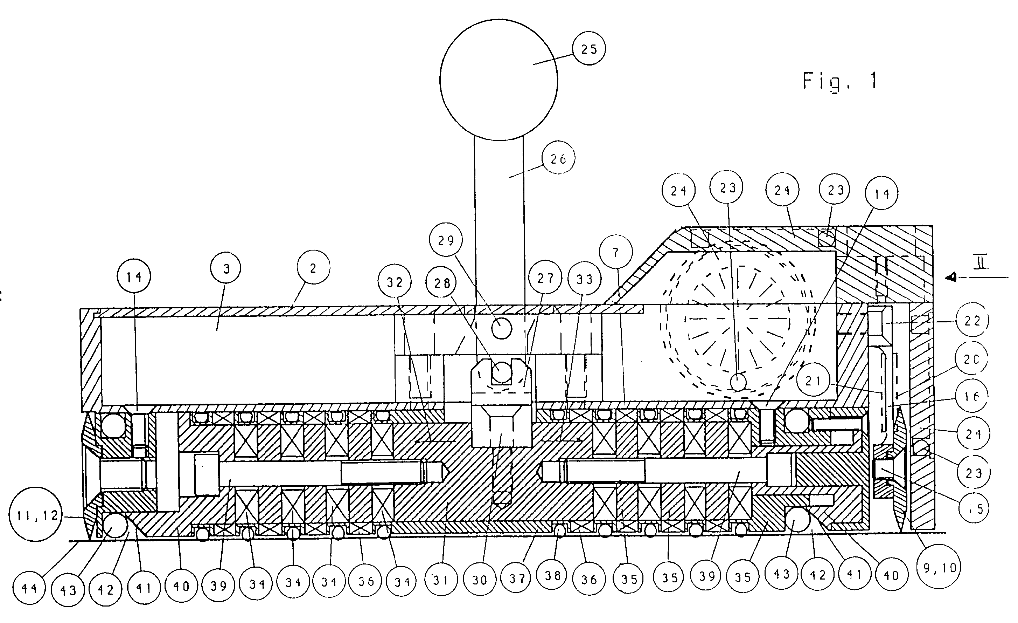

In Figur 1 ist das Gehäuse 1 dargestellt, welches im wesentlichen einen oberen und seitlichen Deckel 2 aufweist, der ein darunter liegendes Elektronikteil 3 abdeckt, in dem die elektronische Auswerteschaltung angeordnet ist.

Auf der gegenüberliegenden Seite jenseits eines Steuerhebels 25 ist ein weiterer Batteriedeckel 4 angeordnet, der ein Batteriefach abdeckt, in dem Batterien als Stromversorgung für einen Fernsteuerbetrieb dieser Meßvorrichtung angeordnet sind.

Auf drei zueinander senkrecht stehenden Wänden des Gehäuses sind jeweils Neigungsmesser 24 angeordnet, wobei jedem Neigungsmesser eine Meßkugel 23 zugeordnet ist. Jeder Neigungsmesser 24 besteht aus einer ringförmigen kreiszylindrischen Nut, in der frei bewegbar die jeweilige Meßkugel 23 angeordnet ist.

Der Innenraum der kreiszylindrischen Nut ist mit einer Rosette ausgestattet, so daß anhand dieser Rosette jeweils die Lage der Meßkugel in Bezug zur Gradeinteilung auf der Rosette erkannt werden kann. Damit kann die Neigung des Geräts auf dem Meßobjekt in Richtung zur Schwerkraftachse festgelegt werden.

Ein derartiger Neigungsmesser ist an der Vorderseite gemäß Figur 1, an der Oberseite, oberhalb des Batteriedeckels 4 und an der rechten Stirnseite im Bereich eines Schutzdeckels 5 angeordnet. Gegenüberliegend zu dem in Frontansicht in Figur 1 sichtbaren Neigungsmesser 24 ist an der nicht-sichtbaren Seitenwand des Gehäuses noch ein weiterer Neigungsmesser 24 angeordnet.

Statt der Meßkugel 23 kann auch ein Meßzeiger verwendet werden.

Das Gehäuse 1 bildet in Richtung zu seiner unteren Gehäusewandung 7 zwei etwa halbkreisförmige Einschuböffnungen, in welche das Einschubteil 6 eingeschoben wird. Das Einschubteil 6 besteht im wesentlichen aus den beiden einen gegenseitigen Abstand voneinander einnehmenden Messerscheibenanordnungen 9,10 bzw. 11,12 und der Hub- und Absenkvorrichtung.

Die elektrische Verbindung zwischen den Dehnungsmeßstreifen 20,21 der Meßvorrichtung im Einschubteil 6 und der zugehörigen Auswerte-Elektronik erfolgt hierbei über Steckverbindungen.

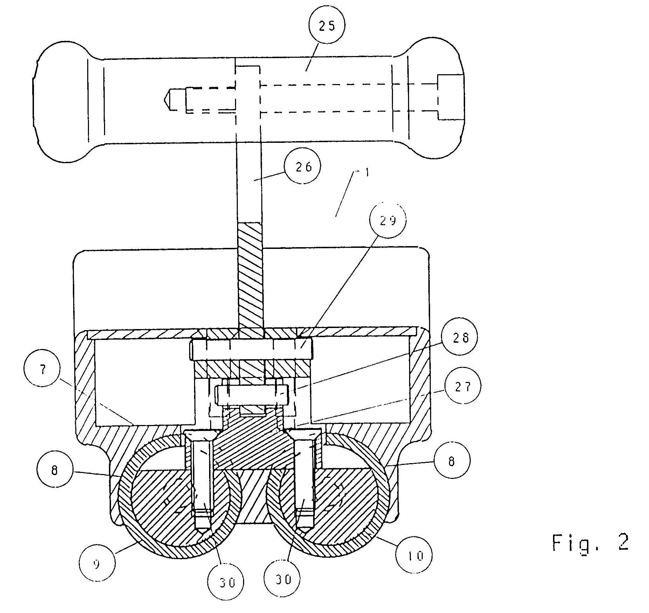

Die halbkreisförmigen Einschuböffnungen 8 sind aus Figur 2 in Vorderansicht zu entnehmen. Das Einschubteil 6 besteht im wesentlichen aus den beiden einander gegenüberliegenden Messerscheibenanordnungen 9,10 und 11,12. Der Einfachheit halber wird im folgenden jeweils nur eine Messerscheibenanordnung 9,11 und deren Lagerung im Einschubteil 6 näher beschrieben.

Die fest mit dem Einschubteil 6 verbundene Messerscheibe 11,12 wird hierbei über eine Schraube 13 mit dem Einschubteil 6 verbunden.

Es wird noch erwähnt, daß das Einschubteil in Pfeilrichtung 33 aus dem Gehäuse 1 herausziehbar ist, wenn der Schutzdeckel 5 entfernt wird.

Umgekehrt ist das Einschubteil in die Einschuböffnungen 8 in Pfeilrichtung 32 einschiebbar.

Zur Verbindung des Einschubteils 6 mit dem Gehäuse 1 dienen die Schrauben 14.

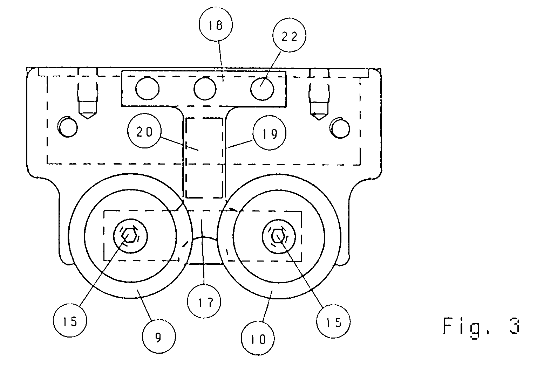

Die Lagerung der bewegbaren Messerscheibenanordnungen 9,10 ist aus Figur 3 entnehmbar. Die beiden Messerscheiben 9,10 sind hierbei an den freien Enden eines Schenkels 17 eines H-Profils drehbar angeordnet, wobei jede Messerscheibe 9,10 über eine Schraube 15 drehbar und feststellbar im Schenkel 17 gelagert ist. Der Schenkel 17 ist über einen Verbindungsarm 19 mit einem gleichartigen H-Schenkel 18 dieses Meßarmes 16 verbunden.

Der H-Schenkel 18 ist über Schrauben 22 (vergl. auch Figur 1) fest mit dem Gehäuse verschraubt.

In der in Figur 1 dargestellen Meßstellung gräbt sich somit die ortsfeste Messerscheibe in der abgesenkten Stellung der Vorrichtung (wie in Figur 1 gezeigt) in die Oberfläche des Meßobjektes ein. Das Meßobjekt ist hierbei durch die Linie 44 symbolisiert. Ebenso gräbt sich die Messerscheibenanordnung 9,10 an der gegenüberliegenden Seite des Gehäuses 1 ebenfalls in die Oberfläche des Meßobjektes ein. Bei einer entsprechenden Längenveränderung des Meßobjektes wird somit die Messerscheibenanordnung 9,10 in den Pfeilrichtungen 33 bewegt, wodurch der Verbindungsarm 19 durchgebogen wird und die auf dem Verbindungsarm fest an der Vorder- und Rückseite festgeklebten Dehnungsmeßstreifen 20,21 eine mechanische Durchbiegung erfahren, wodurch sich deren elektrischer Wert ändert. Diese elektrische Veränderung wird der Auswerteschaltung zugeführt, die im Elektronikteil 3 angeordnet ist.

Im folgenden wird der Hub- und Absenkmechanismus der Meßvorrichtung näher beschrieben.

Hierzu dient ein Steuerhebel 25, der über einen Hebelarm 26 schwenkbar im Gehäuse 1 gelagert ist. Hierbei ist der Hebelarm 26 über ein Drehlager 29 im Gehäuse schwenkbar gelagert. Am freien, unteren Ende des Hebelarmes 26 ist ein Stift 28 angeordnet, der in einen Gabelkopf 27 eingreift, der fest über eine Schraube 30 mit einem Schiebeteil 31 verbunden ist. Dieses Schiebeteil 31 ist Teil des Einschubteils 6 und ist im Einschubteil 6 in den Pfeilrichtungen 32,33 verschiebbar angeordnet.

Das Schiebeteil 31 ist aus einem antimagnetischen Material gebildet, wie z.B. aus Messing oder Aluminium und besteht im wesentlichen aus dem mittleren Teil, der jetzt über die Schraube 30 fest mit dem Gabelkopf 27 verbunden ist.

Das Schiebeteil besteht also im wesentlichen aus dem mittleren Teil gemäß Figur 1, welches über die Schraube 30 mit dem Gabelkopf 27 verbunden ist. Seitlich an dieses mittlere Teil schließen sich Scheibenmagnete 34 an, die in gegenseitigem Abstand parallel zueinander angeordnet sind und zwischen denen jeweils eine antimagnetische Scheibe 35 angeordnet ist. Die gesamte Anordnung - bestehend aus den Scheibenmagneten 34 und den antimagnetischen Scheiben 35 - wird jeweils durch eine Schraube 39 paketförmig zusammengehalten. Gleichzeitig wird über die Schraube 39 auch das Hubteil 30 auf den beiden Seiten dieses Einschubteils 6 festgehalten.

Auf Lücke zu den Scheibenmagneten 34 versetzt sind ringförmige Flußeisenringe fest mit dem Gehäuse 1 verbunden und über die Schraube 14 fest mit dem Gehäuse gesichert.

Wird nun der Steuerhebel 25 beispielsweise in Pfeilrichtung 33 verschoben, so wird über den Gabelkopf 27 das Schiebeteil in Pfeilrichtung 32 nach links bewegt. Hierdurch bewegt sich das gesamte Einschubteil 6 mit allen Scheibenmagneten 34 und den dazwischen paketweise angeordneten Flußeisenringen 36 und den Hubteilen 40 in Pfeilrichtung 32. Hierdurch gelangen die Scheibenmagnete 34 in Gegenüberstellung zu den Flußeisenringen 36 und werden somit kurzgeschlossen und außer Funktion gesetzt. Gleichzeitig greift die jeweilige Konusspitze 41 des Hubteils 40 über den in einer Ausnehmung 42 jeweils angeordneten O-Ring 43, wodurch dieser O-Ring aus der Ausnehmugn 42 nach unten herausgedrückt wird und auf der Oberfläche des Meßobjektes (Linie 44) aufsitzt und dort die gesamte Meßvorrichtung nach oben abdrückt.

Hierdurch wird die Meßvorrichtung also von dem Meßobjekt abgehoben und die Messerscheibenanordnungen 9,10 bzw. 11,12 gelangen außer Eingriff mit der Oberfläche des Meßobjektes.

Wenn in umgekehrter Richtung der Steuerhebel 25 bewegt wird, passieren die eben beschriebenen Vorgänge in analoger Weise. Hierbei gelangen demzufolge die Scheibenmagneten 34 in Gegenüberstellung zu Nuten 37, welche antimagnetisch ausgebildet sind, in welche Nuten schwimmend O-Ringe 38 eingelegt sind.

In dieser Stellung üben die Scheibenmagneten 34 ihre größte Haftkraft aus und es wird somit ein ausgezeichneter Magnethaftverbund mit der zu messenden Oberfläche hergestellt. Gleichzeitig wird durch diese Haftkraft erreicht, daß die Messerscheibenanordnungen 9,10 bzw. 11,12 sich in die Oberfläche des Meßobjekts (Linie 44) eingraben.

Gleichzeitig sitzen damit die O-Ringe 38 reibschlüssig auf der Oberfläche des Meßobjektes auf, womit die Meßvorrichtung einen Reibungsschluß mit dieser Oberfläche einnimmt und damit relativ unverschiebbar und insbesondere nicht verschwenkbar mit der Oberfläche verbunden ist, wenn es sich um runde Meßobjekte handelt. Sofern die Längenveränderung eines antimagnetischen Meßobjektes gemessen werden soll, wird die gesamte Anordnung, d.h. das Gehäuse zusammen mit dem Meßobjekt, über ein Spannband miteinander verbunden, so daß ebenfalls der beschriebene Formschluß der Messerscheibenanordnungen 9,10 bzw. 11,12 mit der Oberfläche des Meßobjektes hergestellt wird.

Die gezeigte Meßvorrichtung ist also für sämtliche Anwendungsfälle geeignet, wo es darum geht, kleinste Längenveränderungen zu erfassen. Sie ist leicht an den Meßobjekten anbringbar und kann leicht entfernt werden.

Wie eingangs erwähnt, kann damit auch die Längenveränderung von gehärteten Oberflächen festgestellt werden, weil die Messerscheiben so scharf ausgebildet sind, daß sie sich in die natürlich vorhandene Rauhigkeit des Meßobjektes eingraben oder anlegen.

ZEICHNUNGS-LEGENDE

| | | | |
|---|---|---|---|
| 1 | Gehäuse | 32 | Pfeilrichtung |
| 2 | Deckel | 33 | Pfeilrichtung |
| 3 | Elektronikteil | 34 | Scheibenmagnet |
| 4 | Batteriedeckel | 35 | antimagnetische Scheibe |
| 5 | Schutzdeckel | 36 | Flußeisenring |
| 6 | Einschubteil | 37 | Nut |
| 7 | Gehäusewandung | 38 | O-Ring |
| 8 | Einschuböffnung | 39 | Schraube |
| 9 | Messerscheibe | 40 | Hubteil |
| 10 | Messerscheibe | 41 | Konusspitze |
| 11 | Messerscheibe | 42 | Ausnehmung |
| 12 | Messerscheibe | 43 | O-Ring |
| 13 | Schraube | 44 | Linie |
| 14 | Schraube | | |
| 15 | Schraube | | |
| 16 | Meßarm | | |
| 17 | Schenkel | | |
| 18 | Schenkel | | |
| 19 | Verbindungsarm | | |
| 20 | Dehnungsmeßstreifen | | |
| 21 | Dehnungsmeßstreifen | | |
| 22 | Schraube | | |
| 23 | Meßkugel | | |
| 24 | Neigungsmesser | | |
| 25 | Steuerhebel | | |
| 26 | Hebelarm | | |
| 27 | Gabelkopf | | |
| 28 | Stift | | |
| 29 | Drehlager | | |
| 30 | Schraube | | |
| 31 | Schiebeteil (antimagnetisch) | | |

**Patentansprüche**

1. Vorrichtung zur Messung, von Dehnungen, Stauchungen, Kräften und Verwindungen an längenveränderlichen Bauteilen, wie z. B. Maschinenteilen, Brücken, Skiliftmasten, Kranträgern und Auslegern, Anhängerbrücken für Kfz, Straßen- und Eisenbahnbrücken, Geleisen und dergleichen Bauteilen mehr, wobei Meßwertgeber, wie z. B. Dehnungsmeßstreifen, Meßtaster, Meßuhren, Piezo- oder Quarzdruckmeßdosen verwendet werden, **dadurch gekennzeichnet**, daß die Vorrichtung ein Gehäuse (1) aufweist, in dem zwei einen gegenseitigen Abstand voneinander einnehmende Messer (9,11) vorhanden sind, von denen das eine Messer (11) fest im Gehäuse (1) und das andere Messer (9) in seinem Abstand zu dem feststehenden Messer (11) verschiebbar oder biegbar im Gehäuse (1) gelagert ist und die Veränderung des Abstands der Messer zueinander mittels der Meßwertgeber erfaßbar ist, wobei im Gehäuse (1) ein Hub- und Absenkmechanismus zum Abheben und Absenken der Vorrichtung relativ zu dem Bauteil vorhanden ist, der beim Absenken der Vorrichtung Haftmagnete (34) funktionsfähig macht, so daß das Gehäuse (1) magnetisch haftend mit dem zu messenden Bauteil verbunden sein kann, wobei gleichzeitig die Spitzen der Messer (9,11) auf der Oberfläche des zu messenden Bauteils in Meßrichtung verschiebefest in Eingriff bringbar sind, und daß in der angehobenen Hubstellung der Vorrichtung die Haftmagnete (34) außer Kraft gesetzt sind und die Messerspitzen außer Eingriff mit der zu messenden Oberfläche bringbar sind.

2. Vorrichtung nach Anspruch 1, **dadurch gekennzeichnet**, daß die Messer (9,11) in der Nähe der Stirnseiten des Gehäuses (1) angeordnet sind, und daß an jeder Stirnseite des Gehäuses (1) nur ein einziges Messer (9,11) oder zwei nebeneinander liegende, einen gegenseitigen-Abstand voneinander einnehmende Messer (9,10,11,12) angeordnet sind.

3. Vorrichtung nach Anspruch 1, **dadurch gekennzeichnet**, daß jedes Messer (9,10,11,12) aus einer Messerscheibe besteht, die drehbar am Gehäuse (1) gelagert ist.

4. Vorrichtung nach Anspruch 1, **dadurch gekennzeichnet**, daß das verschiebbar oder biegbar gelagerte Messer (9,10), in Verbindung mit seiner Befestigung, in abgesenkter Stellung bei der Längenveränderung des Bauteils eine Durchbiegung erfährt, wobei die Durchbiegung der Befestigung über einen oder mehrere daran angeordnete Dehnungsmeßstreifen (20,21) erfaßt wird.

5. Vorrichtung nach Anspruch 1 und 4, **dadurch gekennzeichnet**, daß die Messer (9,10) an einem H-förmigen Flachmaterial des Gehäuses (1) angeordnet sind, wobei sich die Messer (9,10) an einem Schenkel des H-Profils befinden, während der andere H-Schenkel fest mit einer Gehäusekante verbunden ist und hierbei im Bereich des Verbindungschenkels zwischen den H-Schenkeln die Dehnungsmeßstreifen (20,21) angeordnet sind.

6. Vorrichtung nach Anspruch 1, **dadurch gekennzeichnet**, daß die verschiebbar oder biegbar gelagerten Messer (9,10) in ihrem Abstand zueinander verschiebbar im Gehäuse angeordnet sind, wobei die Verschiebung über eine mechanische Meßuhr oder über elektrische Abtastung erfaßt wird.

7. Vorrichtung nach Anspruch 1, **dadurch gekennzeichnet**, daß die Messer (9,10,11,12) mittels des Hub- und Senkmechanismus auf das zu messende Bauteil absenkbar sind und in abgesenkter Stellung formschlüssig in die Oberfläche des zu messenden Objektes eingreifen, während die Meßvorrichtung magnetisch haftend mit dem Bauteil verbunden ist.

8. Vorrichtung nach Anspruch 1, **dadurch gekennzeichnet**, daß zum Absenken bzw. Anheben der Messer (9,10,11,12) die Hub- und Absenkvorrichtung in Verbindung mit einem Verschiebemechanismus vorhanden ist, wobei mit einem Steuerhebel gleichzeitig die gesamte Magnethaftanordnung in eine Funktionsstellung oder in eine Totstellung gebracht wird.

9. Vorrichtung nach Anspruch 1, **dadurch gekennzeichnet**, daß die Unterseite der Meßvorrichtung im Bereich zwischen den Messern (9,10,11,12) in abgesenkter bzw. Meßstellung reibschlüssig mit der Oberfläche des Bauteils verbindbar ausgebildet ist, wobei in Nuten der Vorrichtung schwimmend angeordnete O-Ringe (38) vorgesehen sind.

10. Vorrichtung nach Anspruch 1, **dadurch gekennzeichnet**, daß das Gehäuse (1) in Richtung zu seiner unteren Gehäusewandung (7) zwei etwa halbkreisförmige Einschuböffnungen ausbildet, in welche ein Einschubteil (6), bestehend aus den Messern (9,10,11,12) und der Hub- und Absenkvorrichtung, einschiebbar ist.

11. Vorrichtung nach Anspruch 8 und 10, **dadurch gekennzeichnet**, daß das Einschubteil (6) ein Schiebeteil (31) beinhaltet, welches im Einschubteil verschiebbar aufgenommen ist und welches Schiebeteil (31) im wesentlichen aus einem mittleren Teil besteht, an welchem jeweils seitlich anschließend Scheibenmagnete (34) in gegenseitigem Abstand parallel zueinander und in wechselnder Anordnung mit jeweils da-

7

zwischen liegenden antimagnetischen Scheiben (35) angeordnet sind, welche jeweils paketweise zwischen einem Hubteil (40) und dem mittleren Teil zusammengefaßt sind, und in dem Einschubteil Flußeisenringe (36) verschiebefest gelagert sind, welche in Funktionsstellung jeweils die Umfangsfläche der Scheiben (35) überdecken, wobei das Schiebeteil (31) in Verbindung mit der Anhebung der Messer (9,10,11,12) derart relativ zu den feststehenden Flußeisenringen (36) verschiebbar ist, daß die Scheibenmagnete (34) zumindest teilweise in Abdeckung mit den Flußeisenringen (36) gebracht werden können.

## Claims

1. Device for measuring expansions, compressions, forces and distortions in variable length structural parts, such as for example machine parts, bridges, ski-lift masts, crane supports and jibs, trailer bridges for motor vehicles, road and railway bridges, rails and other such structural parts, in which are used measurand transmitters such as for example expansion measuring strips, measuring callipers, measuring gauges, piezoelectric or quartz measuring gauges, **characterised** in that the device has a housing (1) in which there are provided two measuring devices (9,11) each taking up a mutual distance from each other, in which one of the measuring device (11) is fixed in the housing (1) and the other measuring device (9) is flexibly or displaceably mounted in the housing (1) over its distance from the fixed measuring device (11) and the change in the distance of the measuring devices from each other is picked up by the measurand transmitters, whereby in the housing (1) there is provided a lifting and lowering mechanism for raising and lowering the device relative to the structural part which during the lowering of the device renders holding magnets (34) operative so that the housing (1) can be connected in a magnetically adhering manner with the structural part to be measured, wherein at the same time the points of the measuring devices (9,11) can be non-displaceably brought into engagement in the measuring direction on the surface of the structural part to be measured, and that in the raised lifting position of the device the holding magnets (34) are rendered inoperative and the points of the measuring devices can be brought out of engagement with the surface to be measured.

2. Device according to claim 1, **characterised** in that the measuring devices (9, 11) are arranged in the vicinity of the end faces of the housing (1) and that on each end face of the housing (1) there is arranged only a single measuring device (9,11) or two adjacent measuring devices (9,10; 11,12) arranged at a mutual distance from each other.

3. Device according to claim 1, **characterised** in that each measuring device (9,10,11,12) consists of a measuring disc which is rotatably mounted on the housing (1).

4. Device according to claim 1, **characterised** in that the displaceably or flexibly mounted measuring device (9,10), in combination with its attachment, in the lowered position during the changing of the length of the structural part is subjected to a flexing, the flexing of the attachment being picked up by one or more expansion measuring strips (20,21) arranged thereon.

5. Device according to claim 1 and 4, **characterised** in that the measuring devices (9,10) are arranged on an H-shaped flat material of the housing (1), the measuring devices (9,10) being situated on a limb of the H-shaped profile, whilst the other H-shaped limb is rigidly connected with an edge of the housing and the expansion measuring strips (20,21) are in this case arranged between the H-shaped limbs in the region of the connecting limb.

6. Device according to claim 1, **characterised** in that the displaceably or flexibly mounted measuring devices (9,10) are arranged in the housing displaceably at their distance from each other, the displacement being picked up by a mechanical measuring gauge or through electrical sensing.

7. Device according to claim 1, **characterised** in that the measuring devices (9,10,11,12) can be lowered onto the structural part to measured by means of the lifting and lowering mechanism and in the lowered position engage in a form-fitting manner with the surface of the object to be measured, whilst the measuring device is connected with the structural part in a magnetically adhering manner.

8. Device according to claim 1, **characterised** in that for lowering or raising the measuring devices (9,10,11,12) the lifting and lowering device is provided in combination with a displacement mechanism, a control lever simultaneously bringing the entire magnetic adhesion arrangement into an operative position or into an inoperative position.

9. Device according to claim 1, **characterised** in that in the lowered or measuring position the underside of the measuring device in the region between the measuring devices (9,10,11,12) is designed to be capable of frictional coupling with the surface of the structural part, floating O-rings (38) being provided in grooves of the device.

10. Device according to claim 1, **characterised** in that in the direction of its lower housing wall (7) the housing (1) forms two approximately semi-circular insertion openings into which can be inserted an insert part (6) consisting of the measuring devices (9,10,11,12) and the lifting and lowering device.

11. Device according to claim 8 and 10, **characterised** in that the insert part (6) contains a slide part (31) which is displaceably received in the insert part and which slide part (31) essentially consists of a centre part on which are arranged in each case laterally joining disc magnets (34) at a mutual distance parallel to each other and in alternating arrangement with in each case antimagnetic discs (35) placed inbetween, the antimagnetic discs (35) being combined in each case to form packets between a raised part (40) and the central part, and in the insert part are non-displaceably mounted mild steel rings (36) which in the operating position in each case cover the circumferential surface of the discs (35), whereby in conjunction with the raising of the measuring devices (9,10,11,12) the slide part (31) can be displaced relative to the fixed mild steel rings (36) in such a way that the disc magnets (34) can be brought into a position where they are at least partly covered by the mild steel rings (36).

## Revendications

1. Dispositif pour la mesure d'extensions, d'écrasements, de forces et de gauchissements sur des éléments de construction à longueur variable tels que des éléments de machines, des ponts, des poteaux de remonte-pentes, des poutres et des flèches de grues, des passerelles de remorques pour véhicules, des ponts routiers et ferroviaires, des voies et des éléments de construction similaires, dans lequel sont utilisés des capteurs de mesure comme par exemple des jauges d'allongement, des palpeurs de mesure, des montres-compteurs, des boîtes dynamomètres piézo-électriques ou à quartz, caractérisé en ce que le dispositif comporte un boîtier (1) contenant deux lames (9, 11) qui sont espacées l'une de l'autre, l'une (11) étant montée de façon fixe dans le boîtier (1) tandis que l'autre (9), espacée de la lame fixe (11), est montée coulissante ou flexible dans le boîtier (1), et la variation de l'écartement entre les lames est apte à être détectée à l'aide des capteurs de mesure, étant précisé qu'il est prévu, dans le boîtier (1), un mécanisme de levage et d'abaissement pour relever et abaisser le dispositif par rapport à l'élément de construction, qui rend des aimants adhérents (34) fonctionnels, lors de l'abaissement du dispositif, de sorte que le boîtier (1) peut être relié par adhérence magnétique à l'élément de construction à mesurer, les pointes des lames (9, 11) étant en même temps aptes à venir en prise, sans coulisser, sur la surface de l'élément de construction à mesurer, dans le sens de mesure, et en ce que dans la position relevée du dispositif, les aimants adhérents (34) sont mis hors service et les pointes des lames sont aptes à être désaccouplées de la surface à mesurer.

2. Dispositif selon la revendication 1, caractérisé en ce que les lames (9, 11) sont disposées à proximité des faces frontales du boîtier (1), et en ce qu'il est prévu, au niveau de chaque face frontale du boîtier (1), une seule lame (9, 11) ou deux lames (9, 10, 11, 12) juxtaposées et espacées l'une de l'autre.

3. Dispositif selon la revendication 1, caractérisé en ce que chaque lame (9, 10, 11, 12) se compose d'un disque de lame qui est monté en rotation au niveau du boîtier (1).

4. Dispositif selon la revendication 1, caractérisé en ce que, en cas de variation de longueur de l'élément de construction, la lame (9, 10) montée coulissante ou flexible subit un fléchissement, en liaison avec sa fixation, en position abaissée, étant précisé que le fléchissement de la fixation est détecté par l'intermédiaire d'une ou plusieurs jauges d'allongement (20, 21) disposées au niveau de ladite fixation.

5. Dispositif selon les revendications 1 et 4, caractérisé en ce que les lames (9, 10) sont disposées sur un matériau plat en H du boîtier (1), étant précisé que les lames (9, 10) se trouvent sur une branche du profilé en H tandis que l'autre branche du H est reliée de façon fixe à un bord du boîtier et que les jauges d'allongement (20, 21) sont disposées dans la zone de la branche de liaison entre les branches du H.

6. Dispositif selon la revendication 1, caractérisé en ce que les lames (9, 10) disposées coulissantes ou flexibles sont disposées coulissantes dans le boîtier selon leur écartement, étant précisé que le coulissement est détecté par l'intermédiaire d'une montre-compteur mécanique ou d'un balayage électrique.

7. Dispositif selon la revendication 1, caractérisé en ce que les lames (9, 10, 11, 12) sont aptes à être abaissées sur l'élément de construction à mesurer à l'aide du mécanisme de levage et d'abaissement et, en position abaissée, viennent en prise par complémentarité de forme dans la surface de l'objet à mesurer pendant que le dispositif de mesure est relié par adhérence magnétique à l'élément de construction.

8. Dispositif selon la revendication 1, caractérisé en ce qu'il est prévu, pour abaisser et relever les lames (9, 10, 11, 12), un dispositif de levage et d'abaissement en liaison avec un dispositif de coulissement, étant précisé que tout le dispositif d'adhérence magnétique est amené en même temps dans une position fonctionnelle ou dans une position de point mort à l'aide d'un levier de commande.

9. Dispositif selon la revendication 1, caractérisé en ce que, en position abaissée ou en position de mesure, le côté inférieur du dispositif de mesure est conçu pour pouvoir être relié par friction à la surface de l'élément de construction, dans la zone située entre les lames (9, 10, 11, 12), étant précisé qu'il est prévu des anneaux toriques (38) qui sont disposés de façon flottante dans des rainures du dispositif.

10. Dispositif selon la revendication 1, caractérisé en ce que le boîtier (1) forme, en direction de sa paroi inférieure (7), deux ouvertures d'insertion sensiblement semi-circulaires dans lesquelles peut être inséré un élément embrochable (6) composé des lames (9, 10, 11, 12) et du dispositif de levage et d'abaissement.

11. Dispositif selon les revendications 8 et 10, caractérisé en ce que l'élément embrochable (6) contient un élément coulissant (31) qui est logé de façon coulissante dans l'élément embrochable et qui se compose essentiellement d'une partie centrale dans le prolongement de laquelle sont disposés, latéralement, des disques magnétiques (34) espacés et parallèles, en alternance avec des disques anti-magnétiques (35) prévus entre eux, qui sont réunis par paquets entre un élément de levage (40) et la partie centrale, et dans l'élément embrochable sont montées, non coulissantes, des bagues en acier doux (36) qui couvrent la surface périphérique des disques (35), en position fonctionnelle, étant précisé que l'élément coulissant (31) est apte à coulisser par rapport aux bagues en acier doux fixes (36), en liaison avec le relèvement des lames (9, 10, 11, 12) de telle sorte que les disques magnétiques (34) puissent venir couvrir au moins partiellement les bagues en acier doux (36).

Fig. 1

EP 0 472 838 B1

Fig. 2

Fig. 3